# EUROPEAN PATENT APPLICATION

(11) **EP 2 613 403 A1**
(43) Date of publication of application: **10.07.2013**
(21) Application number: 12150488.0
(22) Date of filing: 09.01.2012
(51) Int. Cl.: H01Q 1/24, H04B 1/38, H01Q 3/24, H01Q 3/26, H01Q 21/28

(54) **Method for antenna lobe optimization**

(71) Applicant: Sony Ericsson Mobile Communications AB, 221 88 Lund (SE)
(72) Inventor: Siotis, Georg, 22471 Lund (SE)
(74) Representative: Valea AB

(57) **Abstract**

The object is achieved by a method in an electronic device 100, 201 for generating an antenna lobe 102. The electronic device 100, 201 comprises at least two antennas 101. The method is detecting 302 at least one obstacle 104 for radiation from the at least two antennas 101 using multi sensor information. The method is also calculating 303 a relative position of the at least two antennas 101 in relation to the detected obstacle 104 and generating 304 an antenna lobe 102 by the at least two antennas 101 such that the antenna lobe 102 is directed away from the in the obstacle 104 based on the calculated relative position.

## Description

### TECHNICAL FIELD

Embodiments herein relates generally to a communication device and a method therein. In particular it relates to optimization of an antenna lobe generated by an antenna.

### BACKGROUND

In modern communications systems power efficiency is getting more important. Increased power efficiency leads to lower power consumption and longer stand by time for battery driven products.

In wireless communications systems an electronic device is connected wirelessly with another node. This other node may be a base station of a mobile network or any other kind of connected device. To enable the electronic device to stay connected with the other node it has to transmit signal power over an antenna. How much power that is required depends on the distance to the other node and the channel conditions.

During ideal channel conditions there is a line of sight between the electronic device and the other node, but during most channel conditions the transmitted signal is both attenuated, and reflected against obstacles causing echoes. This leads to that the transmitted signal is weaker when received by the other node.

When the signal is transmitted via the antenna of the electrical device the transmitted signal is usually not uniformly distributed around the antenna. The transmitted signal is distributed in so called antenna lobes. An antenna lobe has a peak pointing in a certain direction, meaning that the transmitted signal is strongest in that particular direction. The transmitted signal comprises of several peaks and between them several nulls.

The strongest antenna lobe of the electronic device should ideally be pointed towards the other node being a receiving node and not towards the head or the hand of the user, using the mobile phone. If the transmitted signal is absorbed by the head or the user, less signal power may be received by the other node.

When the electronic device comprises at least two antennas it is possible to direct the antenna lobes in different directions in relation to the electronic device. This may e.g. be performed by multiplying the signal to the antennas with a pre-coding matrix. How to this detail is well known in the art.

A problem with prior art is that too much of the transmitted signal is absorbed by obstacles before reaching the receiving node.

### SUMMARY

An object of the present embodiments is to provide an improved electronic device for generating an antenna lobe.

In accordance with a first aspect the object is achieved by a method in an electronic device for generating an antenna lobe. The electronic device comprises at least two antennas. The electronic device comprises detects at least one obstacle for radiation from the at least two antennas by using multi sensor information. The electronic device calculates a relative position of the at least two antennas in relation to the detected obstacle. An antenna lobe is then generated by the at least two antennas such that the antenna lobe is directed away from the obstacle based on the calculated relative position.

In accordance with a second aspect the object is achieved by an electronic device for generating an antenna lobe, The electronic device comprises at least two antennas. The electronic device comprises an obstacle detecting unit adapted to detect at least one obstacle for radiation from the at least two antennas using multi sensor information. The electronic device also comprises a calculating unit adapted to calculate a relative position of the at least two antennas in relation to the detected obstacle. The electronic device also comprises a generating unit adapted to generate an antenna lobe by the at least two antennas such that the antenna lobe is directed away from the obstacle based on the calculated relative position.

In accordance with a third aspect the object is achieved by a computer program. The computer program is loadable into a memory of a computer and comprising software code portions adapted for realizing one or more of the features of the electronic device and/or performing one or more actions of the method.

An advantage with embodiments herein is that less of the transmitted signal is absorbed by objects close to the electronic device.

A further advantage with embodiments herein is that the electronic device will be able to transmit with less power.

A further advantage with embodiments herein is that the battery of the electronic device will last longer.

### BRIEF DESCRIPTION OF THE DRAWINGS

Examples of embodiments herein are described in more detail with reference to attached drawings in which:
Figure 1 is a schematic block diagram illustrating embodiments of an electronic device;
   and
Figure 2a is a schematic diagram illustrating how a mobile phone may be held in relation to the head of the user;
Figure 2b and 2c is a schematic diagram illustrating how the mobile phone may be oriented in relation to the head of the user:
   Figure 3 is a flowchart depicting embodiments of a method in an electronic device.

### DETAILED DESCRIPTION

Embodiments will be exemplified in a non-limiting description.

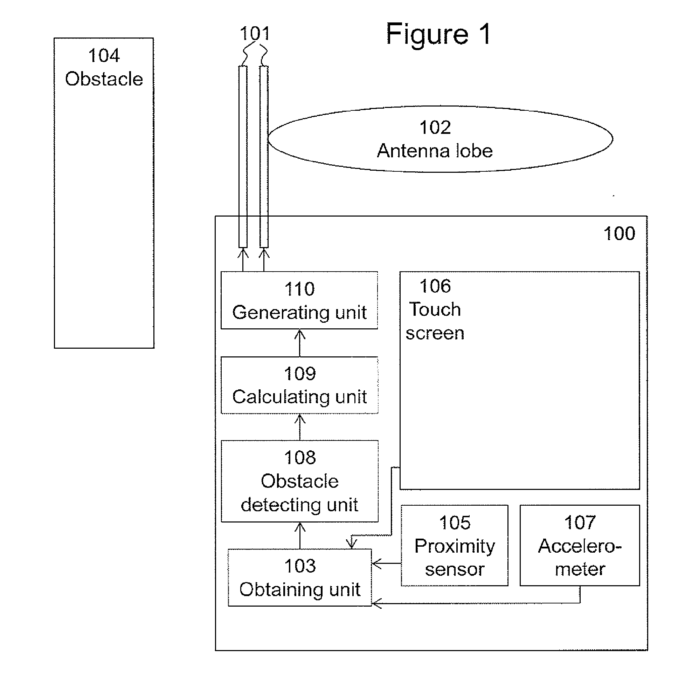

**Figure 1** illustrates a schematic block diagram of an **electronic device 100** according to some embodiments. The description below will be described in the context that the electronic device 100 is a mobile phone, but the skilled person realizes that this is not a limiting description. The electronic device may also be a laptop, a gamepad or a tablet.

The electronic device 100 comprises at least **two antennas 101** adapted to generate an **antenna lobe 102** for communicating wirelessly with another node. This other node may be a base station or any other connected device.

The electronic device 100 may comprise an **obtaining unit 103** adapted to obtain information about one or more **obstacles 104** close to the electronic device 100. These obstacles 104 may often be placed very close to the electronic device 100, which means that they attenuate the radiation from the antennas 101. If the electronic device 100 is a mobile phone the obstacle 104 may be a head of a user of the electronic device 100 and/or a hand of a user of the electronic device 100. The obtaining unit 103 is adapted to obtain multi sensor information from a plurality of sensors within the electronic device 100 or connected to the electronic device 100. Multi sensor information may be any information about obstacles 104 close to the electronic device 100. For example, the obtaining unit 103 is adapted to obtain the multi sensor information from a **proximity sensor 105** comprised in the electronic device 100. The proximity sensor 105 will be further described below. The obtaining unit 103 may further be adapted to obtain the multi sensor information from a **touch screen 106** in the electronic device 100. The touch screen 106 will be further described below. The obtaining unit 103 may further be adapted to obtain the multi sensor information from an **accelerometer 107** in the electronic device 100. The accelerometer 107 will be further described below.

The obtaining unit 103 is connected to an **obstacle detecting unit 108.** The obstacle detecting unit 108 is adapted to detect at least one obstacle 104 for radiation from the at least two antennas 101 using multi sensor information. The obstacle detecting unit 108 may obtain information about the obstacle 104 from the obtaining unit 103.

The obstacle detecting unit 108 is adapted to be connected to a **calculating unit 109.The** calculating unit 109 is adapted to calculate a relative position of the at least two antennas 101 in relation to the detected obstacle 104.

The calculating unit 109 is adapted to be connected to a **generating unit 110** which generating unit is further adapted to be connected to the at least two antennas 101. The generating unit 110 is adapted to generate an antenna lobe 102 by the at least two antennas 101 such that the antenna lobe 102 is directed away from the obstacle 104 based on the calculated relative position.

As described above the multi sensor information about the obstacle 104 may be obtained from a proximity sensor 105. The proximity sensor 105 may detect if there is an obstacle 104 in front of the proximity sensor 105. Depending on the placement of the proximity sensor 105, it may give information regarding where the obstacle 104 is placed in relation to the electronic device 100 and the at least two antennas 101. The proximity sensor will also make it possible to distinguish if the phone is held against a chin or hand held like the office hands free mode.

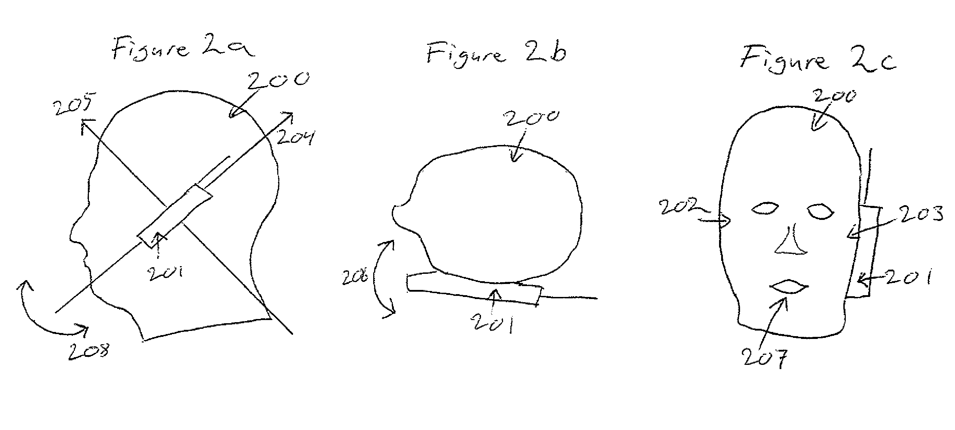

As described above the multi sensor information about the obstacle 104 may be obtained from a touch screen 106 of the electronic device 100. The following description of how the touch screen 106 may be used to obtain information about the placement of the obstacle 104 will be described with reference to **figure 2a** and **figure 2b** where the obstacle 104 is a **head 200** or a hand of the user. The touch screen 106 of the **electronic device 201,** 100 is able to detect the outline of the **ear 202, 203** of the user. When the ear 202, 203 has been detected it is possible to detect whether the ear 202, 203 is placed in a **north/south direction 204** or in an **east/west direction 205.** It is not necessary that the head 200 touches the touch screen 106. Modern touch screens 106 may use air touch to detect that an object is placed above the touch screen 106. Air touch means that the touch screen 106 may detect the presence of an object in the air above the surface of the touch screen 106.

It's not just the head 200 of the user that may attenuate the radiation from the antennas 101 of the electronic device 100. The radiation may also be attenuated by an obstacle 104 such as the hand of the user. It is possible to detect how the hand is held by detecting the fingers close to the touch screen 106. If it is detected that the upper part of the ear 202, 203 is closer to the touch screen 106 than the lower part of the ear 202, 203, it is also possible to detect a **first angle 206** of the electronic device 201 compared to the head 200. The first angle 206 may be detected using the accelerometer 107.

In an electronic device 100 an accelerometer 107 may be included. The accelerometer 107 indicates the orientation of the electronic device 100 in relation to the earth. The accelerometer 107 provides a vector [x, y, z] that always points to the center of the earth. Using the accelerometer 107 the phone may detect if is held against the right or the left ear of the user of the electronic device 100. The accelerometer 107 may also be used to detect if it is held horizontally. The electronic device 100 is usually placed horizontally when an office hands free is used. Office hands free or "speakerphone mode" is where the electronic device 100 is used in "conference" mode so many people can listen and speak at the same time.

In prior art it is known to direct the antenna lobes 102 in different directions depending on the orientation of the electronic device 100, e.g. if the electronic device is held in the right or left hand of the user, or if the phone is placed horizontally. **Figure 1c** illustrates how the electronic device 100 being a phone 201 may be held against the head 200. It may he held against the right ear 202 or the left ear 203. In those cases it is assumed that a microphone of the phone 104 is held close to **the mouth 207** of the user of the phone 201.

As described above the multi sensor information about the obstacle 104 may be obtained from an accelerometer 107 of the electronic device 100. The accelerometer 107 may be used to detect how the electronic device 100 is oriented in relation to the earth. In this way it is possible to detect if the electronic device 100 is placed towards the right ear 202, the left ear 203 or horizontally. It is also possible to detect a **second angle 208** of the phone 100, 201 compared to the head 200.

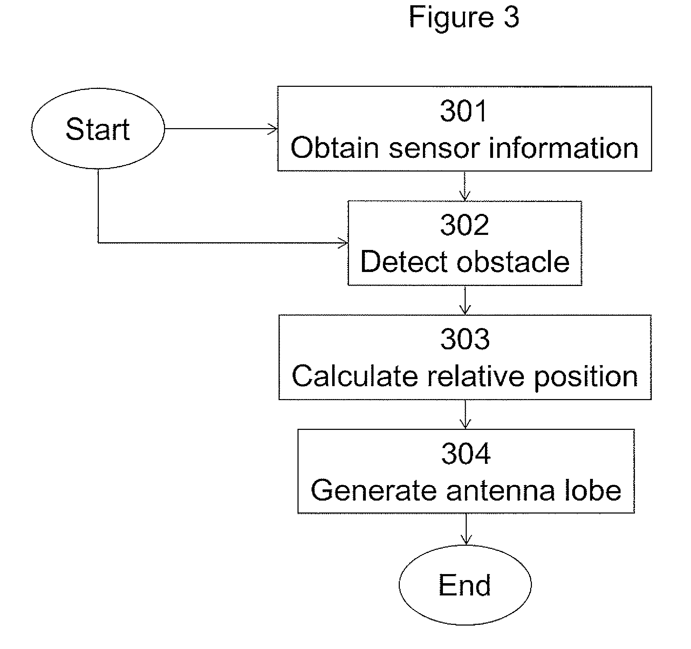

Embodiments of **a method in the electronic device 100** for generating an antenna lobe 102 will now be described with reference to the flowchart depicted in **figure 3****.** The method comprises the following actions, which actions may be carried out in another suitable order than described below.

As mentioned above, the electronic device 100 comprises at least two antennas 101.

### Action 301

The multi sensor information may be obtained in different ways. In some embodiments the multi sensor information is obtained from the obtaining unit 103. The multi sensor information may be obtained from the proximity sensor 105 comprised in the electronic device 100. The multi sensor information may also be obtained from the touch screen 106 or the accelerometer 107 comprised in the electronic device 100.

### Action 302

The electronic device 100 detects at least one obstacle 104 for radiation from the at least two antennas 101 using the multi sensor information. The detection is performed by an obstacle detecting unit 108 comprised in the electronic device 100.

The detected object 104 may e.g. be a head 200 of a user of the electronic device 100, and/or a hand of a user of the electronic device 100.

### Action 303

The electronic device 100 calculates a relative position of the at least two antennas 101 in relation to the detected obstacle 104.

### Action 304

Based on the calculated relative position, the antenna lobe 102 is generated by the at least two antennas 101 such that the antenna lobe 101 is directed away from the in the obstacle 104 based on the calculated relative position.

A computer program product is loadable into a memory of a computer and comprising software code portions adapted for realizing one or more of the features of the electronic device 200 and/or performing one or more actions of the method described above.

Those skilled in the art will also appreciate that the obtaining unit 203, the obstacle detecting unit 208, the calculating unit 209 and the generating unit 210 described above may refer to a combination of analog and digital circuits, and/or one or more processors configured with software and/or firmware, e.g. stored in a memory, that when executed by the one or more processors. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

The embodiments herein are not limited to the above-described preferred embodiments. Various alternatives, modifications and equivalents may be used. Therefore, the embodiments should not be taken as limiting the scope of the invention, which is defined by the appending claims.

## Claims

1. A method in an electronic device (100, 201) for generating an antenna lobe (102), which electronic device (100, 201) comprises at least two antennas (101), the method comprising:
*detecting* (302) at least one obstacle (104) for radiation from the at least two antennas (101), by using multi sensor information,
*calculating* (303) a relative position of the at least two antennas (101) in relation to the detected obstacle (104), and
*generating* (304) an antenna lobe (102) by the at least two antennas (101) such that the antenna lobe (101) is directed away from the in the obstacle (104) based on the calculated relative position.

2. The method according to claim 1 wherein the obstacle (104) is a head (200) of a user of the electronic device (100, 201), and/or a hand of a user of the electronic device (100, 201).

3. The method according to any of claims 1-2, further comprising *obtaining* (301) the multi sensor information.

4. The method according to any of claims 1-3 wherein the multi sensor information is obtained from a proximity sensor (105) comprised in the electronic device (100, 201).

5. The method according to any of claims 1-4 wherein the multi sensor information is obtained from a touch screen (106) comprised in the electronic device (100, 201).

6. The method according to any of claims 1-5 wherein the multi sensor information is obtained from an accelerometer (107) comprised in the electronic device (100, 201).

7. A an electronic device (100, 201) for generating an antenna lobe (102), which electronic device (100, 201) comprises at least two antennas (101), the electronic device (100, 201) comprises
an obstacle detecting unit (108) adapted to detect at least one obstacle (104) for radiation from the at least two antennas (101) using multi sensor information,
a calculating unit (109) adapted to calculate a relative position of the at least two antennas (101) in relation to the detected obstacle (104), and
a generating unit (110) adapted to generate an antenna lobe (102) by the at least two antennas (101) such that the antenna lobe (102) is directed away from the obstacle (104) based on the calculated relative position.

8. The electronic device (100, 201) according to claim 7 wherein the obstacle (104) is a head (200) of a user of the electronic device (100, 201) and/or a hand of a user of the electronic device (100, 201).

9. The electronic device (100, 201) according to any of claims 7-8, further comprising an obtaining unit (103) adapted to obtain the sensor information.

10. The electronic device (100, 201) according to any of claims 7-9 wherein the obtaining unit (103) further is adapted to obtain the multi sensor information from a proximity sensor (105) comprised in the electronic device (100, 201).

11. The electronic device (100, 201) according to any of claims 7-10 wherein the obtaining unit (103) further is adapted to obtain the multi sensor information is obtained from a touch screen (106) in the electronic device (100, 201).

12. The electronic device (100,201) according to any of claims 7-11 wherein the obtaining unit (103) further is adapted to obtain the multi sensor information is obtained from an accelerometer (107) in the electronic device (100, 201).

13. A computer program product loadable into a memory of a computer and comprising software code portions adapted for performing one or more actions of claims 1-6 and/or realizing one or more of the features of claims 7-12
